Europäisches Patentamt

European Patent Office

Office européen des brevets

(11) Veröffentlichungsnummer: **0 458 054 A1**

# (12) EUROPÄISCHE PATENTANMELDUNG

(21) Anmeldenummer: 91105850.1

(22) Anmeldetag: **12.04.91**

(51) Int. Cl.⁵: **F16L 13/08**

(30) Priorität: 23.05.90 DE 4016562

(43) Veröffentlichungstag der Anmeldung:
**27.11.91 Patentblatt 91/48**

(84) Benannte Vertragsstaaten:
**AT BE CH DE DK ES FR GB GR IT LI LU NL SE**

(71) Anmelder: **Beyer, Hans-Hermann, Dr.**
**Am Birkenanger, 11**
**W-8756 Kahl(DE)**

(72) Erfinder: **Beyer, Hans-Hermann, Dr.**
**Am Birkenanger, 11**
**W-8756 Kahl(DE)**

(54) **Rohrverbindungsstücke zur Installation von Rohrleitungen und Verfahren zu ihrer Herstellung.**

(57) Rohrverbindungsstücke (4) zur Installation von Rohrleitungen aus Kupfer, Messing, Rotguß oder Stahl durch Weich- oder Hartlöten werden im Innern mit einer Schicht Flußmittel (3) und einer Schicht Lot (2) versehen in jeweils für die Lötung optimaler Menge.

Fig.1

Fig.2

EP 0 458 054 A1

Die Erfindung betrifft Rohrverbindungsstücke (Fittings) zur Installation von Rohrleitungen aus Kupfer, Messing, Rotguß oder Stahl durch Weich- oder Hartlöten und ein Verfahren zu ihrer Herstellung.

Rohrleitungen aus Kupfer, Messing, Rotguß oder Stahl werden bisher so installiert, daß die zu verbindenden Rohre zunächst gratfrei abgelängt werden. Von den zu lötenden Enden werden die Oxide mechanisch abgerieben Die so gereinigten Enden werden sorgfältig mit einer flußmittelhaltigen Paste eingestrichen und dann von beiden Seiten in die Rohrverbindungsstücke eingeführt. Beim Erreichen der Löttemperatur wird solange Lotdraht abgeschmolzen und am Lotspalt angesetzt, bis das Lot eine Hohlkehle gebildet hat.

In der Praxis sieht das so aus, daß der Installateur die Rohre abslängt, sie zunächst mit den Rohrverbindungsstücken (Verzweigungen, Bögen usw.) zusammensteckt und für die Befestigung an der Wand sorgt. Zum Löten muß er den gesamten Aufbau wieder auseinandernehmen und die Rohrenden mit Flußmittelpaste einstreichen. Das Arbeiten mit den korrosiven Lotpasten ist unangenehm und aufwendig. Die Pasten müssen bei Nichtgebrauch stets verschlossen sein. Sie neigen zum Absitzen und müssen vor der Verwendung meist aufgerührt werden. Um ein zu rasches Absitzen zu verhindern und das Auftragen zu erleichtern, werden meist organische Substanzen zugesetzt, die aber beim Lötvorgang stören. Sie brennen, stinken, rußen und verursachen Blasen im Lotspalt, wenn die optimale Löttemperatur überschritten wird. Selbst für den erfahrenen Installateur ist es außerordentlich schwierig, die optimale Löttemperatur, insbesondere beim Weichlöten, zu erkennen. Anschließend muß er den Lötspalt durch Abschmelzen eines Lotdrahtes füllen.

Eine Verbesserung dieses Lötverfahrens erzielt man mit neuen Lotpasten. Sie enthalten außer dem Flußmittel und einer organischen Binderphase noch Weichlotpulver. Beim Erhitzen der Paste kann man erkennen, wann das Weichlotpulver schmilzt und hat somit einen Anhaltspunkt für die erreichte Temperatur. Die in der Lotpaste enthaltene Weichlotmenge reicht jedoch nicht aus, um den Lotspalt zu füllen. Es ist deshalb in jedem Fall noch Lotdraht nachzufüttern.

Überschüssige Flußmittelreste in der Rohrleitung sind korrosiv und hygienisch nicht unbedenklich. Sie müssen deshalb nach der Verarbeitung durch Spülen der Leitungen entfernt werden. Hier haben Flußmittel mit organischen Zusätzen zu schweren Korrosionsschäden geführt. Die in Wasser schlecht löslichen organischen Reste decken oft die halogenhaltigen Flußmittelreste ab.

Flußmittelreste unter dieser Abdeckung führen dann zu Lochfraß im Kupferrohr.

Beim Abschmelzen des Lotdrahtes kann die Lotmenge nicht richtig dosiert werden. Im allgemeinen verwendet der Installateur einen erheblichen Überschuß an Lot, das irgendwo hinläuft oder abtropft.

Bei schlecht zugänglichen Stellen, z.B. beim Verlegen in der Wand, kann der Lotdraht oft nicht richtig angesetzt werden, insbesondere nicht von hinten, was leicht zur unvollständigen Füllung des Lotspaltes und damit zu undichten Verbindungen führt.

Es war daher Aufgabe der vorliegenden Erfindung, Rohrverbindungsstücke zur Installation von Rohrleitungen aus Kupfer, Messing, Rotguß oder Stahl durch Weich- oder Hartlöten zu entwickeln, die den Lötvorgang vereinfachen und nur soviel Lotmaterial und Flußmittel in Anspruch nehmen, wie zu einer optimalen Lötung erforderlich sind. Außerdem sollte ein Verfahren zu ihrer Herstellung gefunden werden.

Diese Aufgabe wird erfindungsgemäß dadurch gelöst, daß auf der Innenwand der Rohrverbindungsstücke eine dünne Flußmittelschicht in einer für die Lötung optimalen Menge und darüber eine dünne Lotschicht in einer für die Lötung optimalen Menge aufgebracht sind.

Die Herstellung dieser Rohrverbindungsstücke erfolgt vorzugsweise durch mechanische Verformung von Lotringen zu dünnwandigen Zylindern mit geringfügig kleinerem Außendurchmesser als der Innendurchmesser der Rohrverbindungsstücke beträgt, Bestreichen der Zylinderaußenflächen mit einem Flußmittel, Einführung der Lotzylinder in die Rohrverbindungsstücke und Anpressen an deren Innenwand.

Vorzugsweise wird bei der mechanischen Verformung ein Teil des Lotrings belassen und zwei mit den Lotringen verbundene, mit Flußmittel bestrichene Zylinder von beiden Seiten mit dem Lotring zuerst in das Rohrverbindungsstück eingeführt und angepresst.

Folgendes Beispiel soll das Herstellungsverfahren näher erläutern:

Durch Fließpressen werden zunächst aus Lotringen Lotformteile hergestellt, die aus einem Lotring und einem daran anschließenden, 20 - 50 μm dicken zylinderförmigen Mantel bestehen. Auf dem Mantel wird das in einem leichtflüchtigen Medium (z.B. Methanol) aufgeschlämmte Weichlotflußmittelpulver dünn aufgetragen und das Lösungsmittel verdampft. Zwei Lotformteile mit dem Flußmittelauftrag werden von beiden Seiten in das Innere des Rohrverbindungsstücks eingeführt und mit einem Aufweiterungswerkzeug an die Wand gepreßt, wobei die verbliebenen Lotringe sich in der Mitte befinden müssen, damit das Zusammenstecken der Rohrleitungen nicht behindert wird.

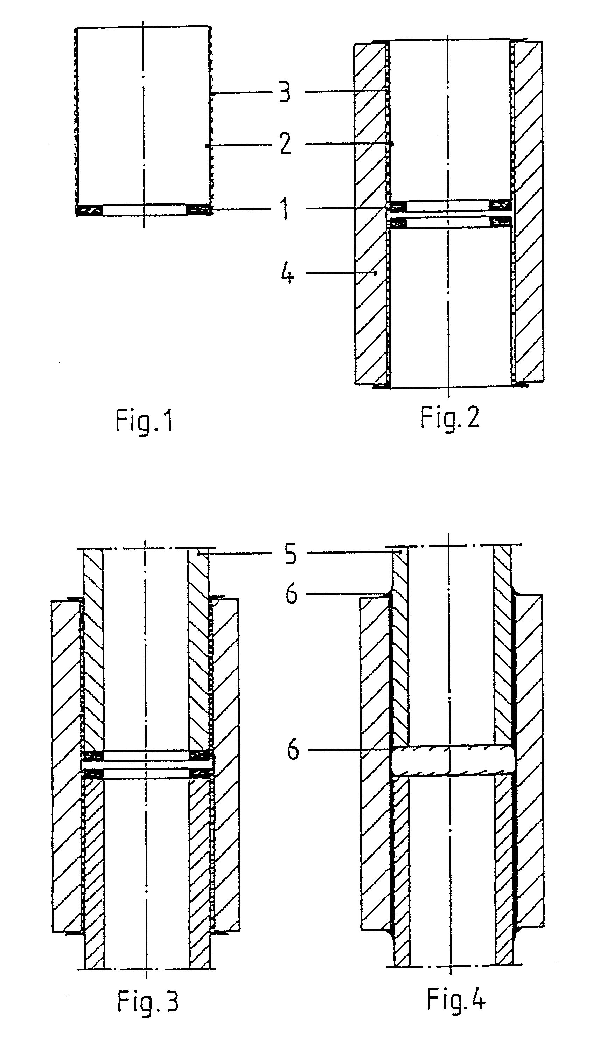

Die Figuren 1 bis 4 zeigen schematisch solche Rohrverbindungsstücke in beispielhafter Ausführungsform im Längsschnitt und eine damit gelötete Rohrverbindung.

Figur 1 zeigt einen Lotring (1) , der mit einem dünnen zylindrischen Mantel aus dem gleichen Lotmaterial verbunden ist, der als Lotschicht (2) dient. Auf diese Lotschicht (2) ist eine dünnere Schicht (3) aus einem Flußmittel aufgebracht. Zwei dieser Lotringgebilde werden mit dem Lotring (1) voran von beiden Seiten in das Rohrverbindungsstück (4) eingebracht und mit einem Werkzeug an die Innenwand gepreßt.

In Figur 3 sind die beiden zu lötenden Rohrenden (5) in das Rohrverbindungsstück (4) eingeführt. Das ist problemlos möglich, weil die duktile Lotschicht (2) mit einem Aufweitungswerkzeug exakt an die Wand gedrückt werden kann.

In Figur 4 ist das Rohrverbindungsstück (4) nach dem Lötvorgang dargestellt. Das Lot ist geschmolzen und durch die Kapillarkräfte in den Lotspalt gesaugt worden unter Ausbildung von Hohlkehlen (6).

Die mit den erfindungsgemäßen Rohrverbindungsstücken erzielten Vorteile bestehen für den Anwender darin, daß auf das Hantieren mit korrosiven Flußmittelpasten verzichtet werden kann, die von den Pasten verursachten Korrosions- und Hygieneprobleme völlig ausgeschlossen sind, ein exaktes Einhalten der Löttemperatur nicht nötig ist (kein organischer Binder) und die richtige Lotmenge in optimaler Position vorliegt.

Als Weichlot für die Kalt- und Warmwasserinstallation von Kupferrohren wird beispielsweise ein Lot mit der Zusammensetzung 97 Gew % Sn, 3 Gew % Cu oder ein Lot aus 96 Gew % Sn mit 4 Gew % Ag verwendet. Als Flußmittel kann ein Gemisch aus 85 Gew % $ZnCl_2$ und 15 Gew % $NH_4Cl$ oder ein Flußmittel aus 1.8 Gew % $NH_4Cl$ und 82 Gew % $SnCl_2$ verwendet werden, $ZnCl_2$ ist hygroskopisch, deshalb ist auch unter der Abdeckung mit der Lotschicht die Lagerzeit nur begrenzt, diese Einschränkung besteht für das $SnCl_2$-haltige Flußmittel nicht.

Als Hartlot für die Installation von Kupfer- oder Stahlrohren wird beispielsweise ein Silberhartlot der Zusammensetzung 45 Gew % Ag, 27 Gew % Cu, 3 Gew % Sn, 25 Gew % Zn verwendet und ein Flußmittel, das in der Flußmittel-Normbezeichnung nach DIN 8511 mit F-SH1 bezeichnet ist.

Die optimale Menge von Lot- und Flußmittel, bzw. die Dicke der Schichten von Flußmittel und Lot sind abhängig von der Größe der Rohrverbindungsstücke, der Flußmittelzusammensetzung und der Lotlegierung.

## Patentansprüche

1. Rohrverbindungsstücke zur Installation von Rohrleitungen aus Kupfer, Messing, Rotguß oder Stahl durch Weich- oder Hartlöten,
dadurch gekennzeichnet,
daß auf der Innenwand der Rohrverbindungsstücke (4) eine dünne Flußmittelschicht (3) in einer für die Lötung optimalen Menge und darüber eine dünne Lotschicht (2) in einer für die Lötung optimalen Menge aufgebracht sind.

2. Rohrverbindungsstücke nach Anspruch 1,
dadurch gekennzeichnet,
daß die Lotschichten (2) jeweils mit einem Lotring (1) versehen sind.

3. Verfahren zur Herstellung von Rohrverbindungsstücken nach Anspruch 1,
dadurch gekennzeichnet, daß durch eine mechanische Verformung aus Lotringen dünnwandige Zylinder mit geringfügig kleinerem Außendurchmesser als der Innendurchmesser des Rohrverbindungsstücks beträgt gefertigt werden, die Zylinderaußenflächen mit Flußmittel bestrichen, in die Rohrverbindungsstücke eingeführt und an deren Innenwand angepresst werden.

4. Verfahren zur Herstellung von Rohrverbindungsstücken nach Anspruch 2 und 3,
dadurch gekennzeichnet,
daß bei der mechanischen Verformung ein Teil der Lotringe erhalten bleibt, in jedes Rohrverbindungsstück zwei mit Flußmittel bestrichene Zylinder mit dem Lotring voran eingeführt und an deren Innenwand angepresst werden.

Fig.1

Fig.2

Fig.3

Fig.4

**Europäisches Patentamt**

# EUROPÄISCHER RECHERCHENBERICHT

Nummer der Anmeldung

**EP 91 10 5850**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | AU-B-2 067 77   (YORKSHIRE COPPER WORKS ET AL) <br> * Spalte 4, Zeilen 16 - 21 * <br> – – – | 1,2 | F 16 L 13/08 |
| A | FR-A-2 026 862   (SVENSKA METALLVERKEN) <br> * Seite 4, Zeilen 3 - 15; Figur 1 * <br> – – – | 1,2 | |
| A | DE-A-2 823 122   (NISSHIN STEEL) <br> * Anspruch 1; Figur 1 * <br> – – – – – | 1,2 | |

| RECHERCHIERTE SACHGEBIETE (Int. Cl.5) |
|---|
| F 16 L |

Der vorliegende Recherchenbericht wurde für alle Patentansprüche erstellt

| Recherchenort | Abschlußdatum der Recherche | Prüfer |
|---|---|---|
| Berlin | 13 Juni 91 | SCHLABBACH M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument